# EUROPEAN PATENT APPLICATION

(11) **EP 2 624 588 A2**
(43) Date of publication of application: **07.08.2013**
(21) Application number: 13000366.8
(22) Date of filing: 24.01.2013
(51) Int. Cl.: H04Q 11/00, H04L 12/28

(54) **Ethernet passive optical network over coaxial physical layer and tuning**

(30) Priority: 03.02.2012 US 201261594793 P; 22.06.2012 US 201213531070
(71) Applicant: Broadcom Corporation, Irvine, CA 92617 (US)
(72) Inventor: Boyd, Edward, Petaluma, CA 94954 (US); Goswami, Sanjay, Santa Rosa, CA 95404 (US); Melcon, Josh, Petaluma, CA 94952 (US)
(74) Representative: Jehle, Volker Armin

(57) **Abstract**

Example registration procedures for Ethernet Passive Optical Network Over Coax (EPOC) are provided. The procedures are compliant with the Ethernet Passive Optical Network (EPON) standard. The procedures cover initial coaxial media converter (CMC) registration; physical layer discovery and link up over a coaxial link of an EPOC network; and medium access control (MAC)-level discovery and link up over an EPOC network. As such, the procedures can be used to fully bring an EPOC network to user traffic readiness. In addition, the procedures, or a variation thereof, can be used to enable periodic maintenance of the coaxial link of the EPOC network, thereby maintaining adequate communication conditions over the coaxial link.

## Description

### CROSS-REFERENCE TO RELATED APPLICATIONS

The present application claims the benefit of U.S. Provisional Patent Application No. 61/594,793 filed on February 3, 2012, which is incorporated herein by reference in its entirety.

### Field of the Invention

The present disclosure relates generally to Ethernet.

### BACKGROUND

### Background Art

A Passive Optical Network (PON) is a single, shared optical fiber that uses inexpensive optical splitters to divide a single fiber into separate strands feeding individual subscribers. An Ethernet PON (EPON) is a PON based on the Ethernet standard. EPONs provide simple, easy-to-manage connectivity to Ethernet-based, IP equipment, both at customer premises and at the central office. As with other Gigabit Ethernet media, EPONs are well-suited to carry packetized traffic. An Ethernet Passive Optical Network Over Coax (EPOC) is a network that enables EPON connectivity over a coaxial network.

### BRIEF SUMMARY OF THE INVENTION

According to an aspect, a method is provided for tuning a coaxial link in an Ethernet Passive Optical Network over Coaxial (EPOC) network, comprising:
sending a first Ethernet Passive Optical Network (EPON) Medium Access Control (MAC) message to an Optical Line Terminal (OLT);
receiving a second EPON MAC message from the OLT, the second EPON MAC message specifying a first reserved upstream time slot;
generating a modified EPON MAC message from the second EPON MAC message, the second EPON MAC message specifying a second reserved upstream time slot based on the first reserved upstream time slot;
sending the modified EPON MAC message to a Coaxial Network Unit (CNU); receiving a tuning burst from the CNU within the second reserved upstream time slot; and
sending a tuning message to the CNU based on the received tuning burst.

Advantageously, the first EPON MAC message is a Multi-Point Control Protocol (MPCP) Report message.

Advantageously, the first EPON MAC message includes a desired length of the first reserved upstream time slot.

Advantageously, the desired length of the first reserved upstream time slot is determined based on an anticipated length of the tuning burst from the CNU.

Advantageously, the second EPON MAC message is a Multi-Point Control Protocol (MPCP) GATE message.

Advantageously, generating the modified EPON MAC message from the second EPON MAC message comprises:
replacing a MAC destination address of the second EPON MAC message with a MAC destination address of the CNU; and
tagging the second EPON MAC message as a maintenance message.

Advantageously, generating the modified EPON MAC message further comprises:
adding a physical layer (PHY) index into the modified EPON MAC message.

Advantageously, the PHY index identifies an active PHY link assigned to the CNU.

Advantageously, the PHY index identifies a test PHY link.

Advantageously, the method further comprises:
measuring at least one of amplitude, phase, and bit error rate based on the received tuning burst.

Advantageously, the tuning message includes adjustments to one or more of upstream transmit time, upstream transmit power, upstream sub-band configuration, and upstream bit loading rate at the CNU.

Advantageously, the method further comprises:
sending a PHY message to the CNU, the PHY message instructing the CNU to register with the OLT.

According to an aspect, a Coaxial Media Converter (CMC) comprises:
an Ethernet Passive Optical Network (EPON) Medium Access Control (MAC) module configured to send a first EPON MAC message to an Optical Line Terminal (OLT), receive a second EPON MAC message from the OLT, the second EPON MAC message specifying a first reserved upstream time slot, and generate a modified EPON MAC message from the second EPON MAC message, the second EPON MAC message specifying a second reserved upstream time slot based on the first reserved upstream time slot; and
an Ethernet Passive Optical Network over Coaxial (EPOC) physical layer (PHY) module configured to send the modified EPON MAC message to a Coaxial Network Unit (CNU).

Advantageously, the EPOC PHY module is further configured to receive a tuning burst from the CNU within the second reserved upstream time slot, and to send a tuning message to the CNU based on the received tuning burst.

Advantageously, the EPOC PHY is further configured to measure at least one of amplitude, phase, and bit error rate based on the received tuning burst.

Advantageously, the tuning message includes adjustments to one or more upstream transmit time, upstream transmit power, upstream sub-band configuration, and upstream bit loading rate at the CNU.

Advantageously, the first EPON MAC message is a Multi-Point Control Protocol (MPCP) Report message, and wherein the second EPON MAC message is a Multi-Point Control Protocol (MPCP) GATE message.

According to an aspect, a method is provided for tuning a coaxial link in an Ethernet Passive Optical Network over Coaxial (EPOC) network, comprising:
intercepting a first Ethernet Passive Optical Network (EPON) Medium Access Control (MAC) message destined to an Optical Line Terminal (OLT) from a Coaxial Network Unit (CNU), the first EPON MAC message being sent within a reserved upstream time slot assigned by the OLT; and
sending a tuning message to the CNU in a remaining time period of the reserved upstream time slot.

Advantageously, the tuning message includes adjustments to one or more of upstream transmit time, upstream transmit power, upstream sub-band configuration, and upstream bit loading rate at the CNU.

Advantageously, the first EPON MAC message is a Multi-Point Control Protocol (MPCP) REGISTER REQ message, in response to a MPCP Broadcast or Direct Discovery GATE message from the OLT.

### BRIEF DESCRIPTION OF THE DRAWINGS/FIGURES

The accompanying drawings, which are incorporated herein and form a part of the specification, illustrate the present disclosure and, together with the description, further serve to explain the principles of the disclosure and to enable a person skilled in the pertinent art to make and use the disclosure.

FIG. 1 illustrates an example hybrid Ethernet Passive Optical Network (EPON)-Ethernet Passive Optical Network Over Coax (EPOC) network architecture.

FIG. 2 illustrates another example hybrid EPON-EPOC network architecture.

FIG. 3 illustrates an example EPOC portion of a hybrid EPON-EPOC network according to an embodiment of the present disclosure.

FIG. 4 illustrates an EPON Optical Network Unit (ONU) discovery process.

FIG. 5 illustrates an example downstream discovery process according to an embodiment of the present disclosure.

FIG. 6 illustrates an example downstream burst according to an embodiment of the present disclosure.

FIG. 7 illustrates an example upstream Coaxial Network Unit (CNU) PHY discovery process according to an embodiment of the present disclosure.

FIG. 8 illustrates another example upstream CNU PHY discovery process according to an embodiment of the present disclosure.

FIG. 9 illustrates an example upstream CNU PHY tuning process according to an embodiment of the present disclosure.

FIG. 10 illustrates another example upstream CNU PHY tuning process according to an embodiment of the present disclosure.

FIG. 11 illustrates an example CNU Medium Access Control (MAC) discovery process according to an embodiment of the present disclosure.

FIG. 12 illustrates another example CNU MAC discovery process according to an embodiment of the present disclosure.

FIG. 13 illustrates an example computer system that can be used to implement aspects of the present disclosure.

The present disclosure will be described with reference to the accompanying drawings. Generally, the drawing in which an element first appears is typically indicated by the leftmost digit(s) in the corresponding reference number.

### DETAILED DESCRIPTION OF EMBODIMENTS

### I. Example Hybrid EPON-EPOC Network Architectures

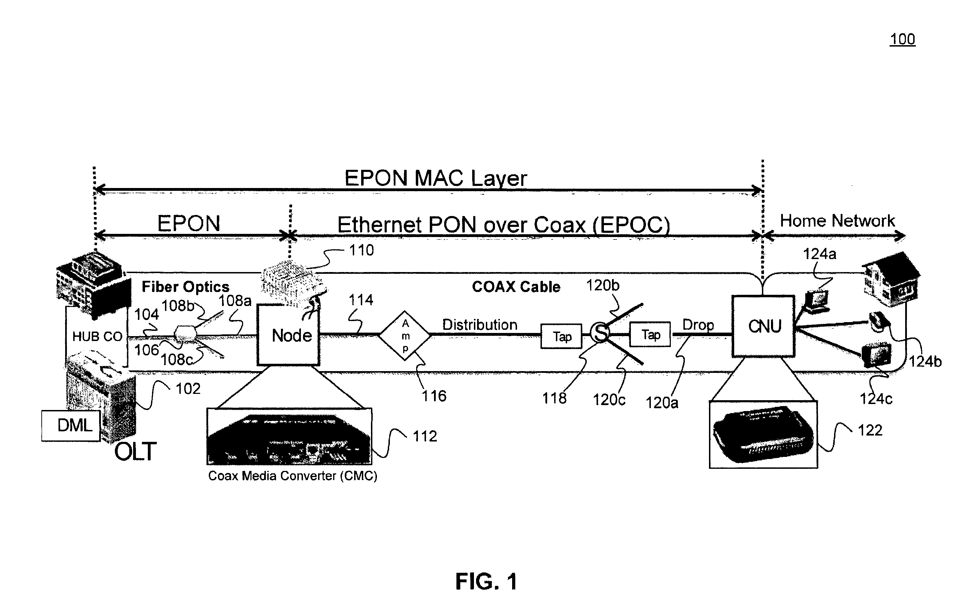

FIG. 1 illustrates an example hybrid Ethernet Passive Optical Network (EPON)-Ethernet Passive Optical Network Over Coax (EPOC) network architecture 100 according to an embodiment of the present disclosure. As shown in FIG. 1, example network architecture 100 includes an Optical Line Terminal (OLT) 102, an optional optical passive splitter 106, a communications node 110 including a coaxial media converter (CMC), an optional amplifier 116, an optional coaxial splitter 118, a coaxial network unit (CNU) 122, and a plurality of subscriber media devices 124.

OLT 102 sits at a central office (CO) of the network and is coupled to a fiber optic line 104. OLT 102 may implement a DOCSIS (Data Over Cable Service Interface Specification) Mediation Layer (DML) which allows OLT 102 to provide DOCSIS provisioning and management of network components (e.g., CMC, CMU, Optical Network Unit (ONU)). Additionally, OLT 102 implements an EPON Media Access Control (MAC) layer (e.g., IEEE 802.3ah).

Optionally, passive splitter 106 can be used to split fiber optic line 104 into a plurality of fiber optic lines 108. This allows multiple subscribers in different geographical areas to be served by the same OLT 102 in a point-to-multipoint topology.

Communications node 110 serves as a converter between the EPON side and the EPOC side of the network. Accordingly, node 110 is coupled from the EPON side of the network to a fiber optic line 108a, and from the EPOC side of the network to a coaxial cable 114. In an embodiment, communications node 110 includes a coaxial media converter (CMC) 112 that allows EPON to EPOC (and vice versa) conversion.

CMC 112 performs physical layer (PHY) conversion from EPON to EPOC, and vice versa. In an embodiment, CMC 112 includes a first interface (not shown in FIG. 1), coupled to fiber optic line 108, configured to receive a first optical signal from OLT 102 and generate a first bitstream having a first physical layer (PHY) encoding. In an embodiment, the first PHY encoding is EPON PHY encoding. CMC 112 also includes a PHY conversion module (not shown in FIG. 1), coupled to the first interface, configured to perform PHY layer conversion of the first bitstream to generate a second bitstream having a second PHY encoding. In an embodiment, the second PHY encoding is EPOC PHY encoding. Furthermore, CMC 112 includes a second interface (not shown in FIG. 1), coupled to the PHY conversion module and to coaxial cable 114, configured to generate a first radio frequency (RF) signal from the second bitstream and to transmit the first RF signal over coaxial cable 114.

In EPOC to EPON conversion (i.e., in upstream communication), the second interface of CMC 112 is configured to receive a second RF signal from CNU 122 and generate a third bitstream therefrom having the second PHY encoding (e.g., EPOC PHY encoding). The PHY conversion module of CMC 112 is configured to perform PHY layer conversion of the third bitstream to generate a fourth bitstream having the first PHY encoding (e.g., EPON PHY encoding). Subsequently, the first interface of CMC 112 is configured to generate a second optical signal from the fourth bitstream and to transmit the second optical signal to OLT 102 over fiber optic line 108.

Optionally, an amplifier 116 and a second splitter 118 can be placed in the path between communications node 110 and CNU 122. Amplifier 116 amplifies the RF signal over coaxial cable 114 before splitting by second splitter 118. Second splitter 118 splits coaxial cable 114 into a plurality of coaxial cables 120, to allow service over coaxial cables of several subscribers which can be within same or different geographic vicinities.

CNU 122 generally sits at the subscriber end of the network. In an embodiment, CNU 122 implements an EPON MAC layer, and thus terminates an end-to-end EPON MAC link with OLT 102. Accordingly, CMC 112 enables end-to-end provisioning, management, and Quality of Service (QoS) functions between OLT 102 and CNU 122. CNU 122 also provides multiple Ethernet interfaces that could range between 10Mbps to 10Gbps, to connect subscriber media devices 124 to the network. Additionally, CNU 122 enables gateway integration for various services, including VOIP (Voice-Over-IP), MoCA (Multimedia over Coax Alliance), HPNA (Home Phoneline Networking Alliance), Wi-Fi (Wi-Fi Alliance), etc. At the physical layer, CNU 122 may perform physical layer conversion from coaxial to another medium, while retaining the EPON MAC layer.

According to embodiments, EPON-EPOC conversion can occur anywhere in the path between OLT 102 and CNU 122 to provide various service configurations according to the services needed or infrastructure available to the network. For example, CMC 112, instead of being integrated within node 110, can be integrated within OLT 102, within amplifier 116, or in an Optical Network Unit (ONU) located between OLT 102 and CNU 122 (not shown in FIG. 1).

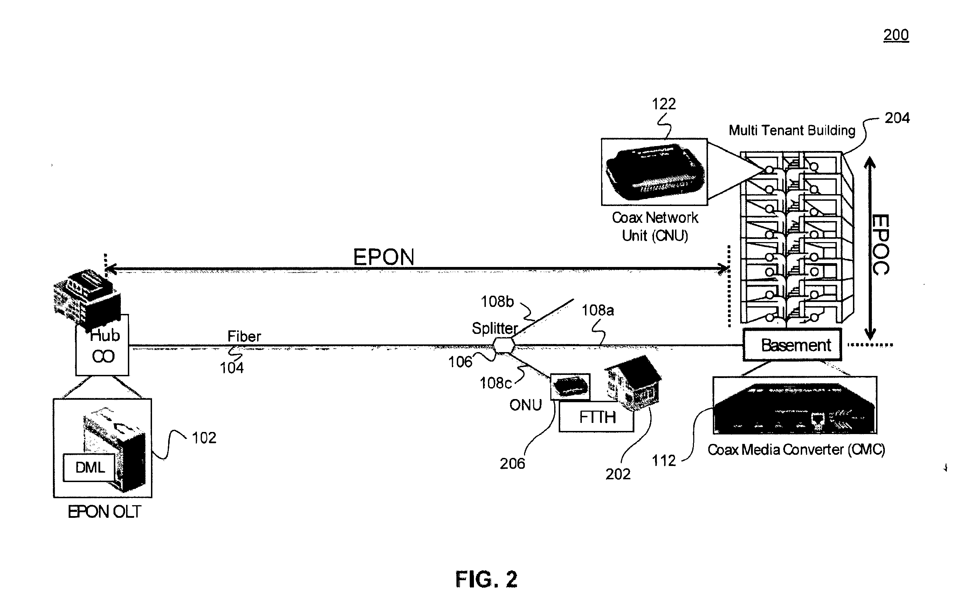

FIG. 2 illustrates another example hybrid EPON-EPOC network architecture 200 according to an embodiment of the present disclosure. In particular, example network architecture 200 enables simultaneous FTTH (Fiber to the Home) and multi-tenant building EPOC service configurations.

Example network architecture 200 includes similar components as described above with reference to example network architecture 100, including an OLT 102 located in a CO hub, a passive splitter 106, a CMC 112, and one or more CNUs 122. OLT 102, splitter 106, CMC 112, and CNU 122 operate in the same manner described above with reference to FIG. 1.

CMC 112 sits, for example, in the basement of a multi-tenant building 204. As such, the EPON side of the network extends as far as possible to the subscriber, with the EPOC side of the network only providing short coaxial connections between CMC 112 and CNU units 122 located in individual apartments of multi-tenant building 204.

Additionally, example network architecture 200 includes an Optical Network Unit (ONU) 206. ONU 206 is coupled to OLT 102 through an all-fiber link, comprised of fiber lines 104 and 108c. ONU 206 enables FTTH service to a home 202, allowing fiber optic line 108c to reach the boundary of the living space of home 202 (e.g., a box on the outside wall of home 202).

Accordingly, example network architecture 200 enables an operator to service both ONUs and CNUs using the same OLT. This includes end-to-end provisioning, management, and QoS with a single interface for both fiber and coaxial subscribers. In addition, example network architecture 200 allows for the elimination of the conventional two-tiered management architecture, which uses media cells at the end user side to manage the subscribers and an OLT to manage the media cells.

### II. Example Coaxial EPOC Link

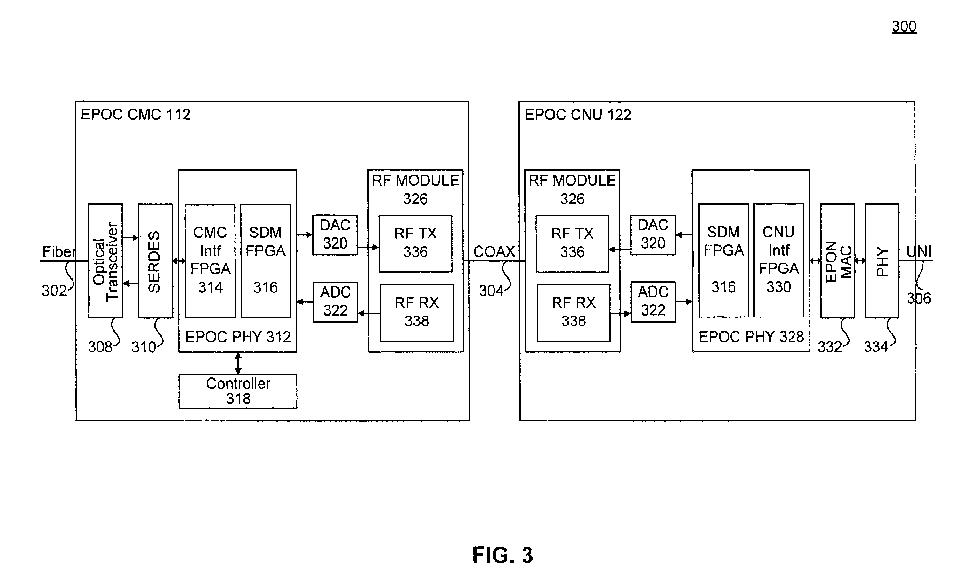

FIG. 3 illustrates an example implementation 300 of an EPOC portion of a hybrid EPON-EPOC network. Example implementation 300 may be an embodiment of the EPOC portion of example EPON-EPOC network 100, described in FIG. 1, or example EPON-EPOC network 200, described above in FIG. 2. As shown in FIG. 3, the EPOC portion includes an EPOC CMC 112 and an EPOC CNU 122, connected via a coaxial network 304.

EPOC CMC 112 includes an optical transceiver 308, a serializer-deserializer (SERDES) module 310, an EPOC PHY module 312, including, in an embodiment, a CMC Interface Field Programmable Gated Array (FPGA) 314 and a Sub-band Division Multiplexing (SDM) FPGA 316, a controller module 318, an analog-to-digital converter (ADC) 322, digital-to-analog converters (DAC) 320, and an radio frequency (RF) module 326, including RF transmit (TX) circuitry 336 and RF receive (RX) circuitry 338.

Optical transceiver 308 may include a digital optical receiver configured to receive an optical signal over a fiber optic cable 302 coupled to CMC 112 and to produce an electrical data signal therefrom. Fiber optic cable 302 may be part of an EPON network that connects CMC 112 to an OLT, such as OLT 102. Optical transceiver 307 may also include a digital optical laser to produce an optical signal from an electrical data signal and to transmit the optical signal over fiber optic cable 302.

SERDES module 310 performs parallel-to-serial and serial-to-parallel conversion of data between optical transceiver 308 and EPOC PHY 312. Electrical data received from optical transceiver 308 is converted from serial to parallel for further processing by EPOC PHY 312. Likewise, electrical data from EPOC PHY 312 is converted from parallel to serial for transmission by optical transceiver 308.

EPOC PHY module 312, optionally with other modules of CMC 112, forms a two-way PHY conversion module. In the downstream direction (i.e., traffic to be transmitted to EPOC CNU 122), EPOC PHY 312 performs PHY level conversion from EPON PHY to coaxial PHY and spectrum shaping of downstream traffic. For example, CMC Interface FPGA 314 may perform line encoding functions, Forward Error Correction (FEC) functions, and framing functions to convert EPON PHY encoded data into coaxial PHY encoded data. SDM FPGA 316 may perform SDM functions, including determining sub-carriers for downstream transmission, determining the width and frequencies of the sub-carriers, selecting the modulation order for downstream transmission, and dividing downstream traffic into multiple streams each for transmission onto a respective sub-carrier of the sub-carriers. In the upstream direction (i.e., traffic received from EPOC CNU 112), EPOC PHY 312 performs traffic assembly and PHY level conversion from coaxial PHY to EPON PHY. For example, SDM FPGA 316 may assemble streams received over multiple sub-carriers to generate a single stream. Then, CMC Interface FPGA 314 may perform line encoding functions, FEC functions, and framing functions to convert coaxial PHY encoded data into EPON PHY encoded data. Detailed description of exemplary implementations and the operation of CMC 112, including functions performed by EPOC PHY 312, can be found in U.S. Application No. 12/878,643, filed September 9, 2010, which is incorporated herein by reference in its entirety.

As would be understood by a person of skill in the art based on the teachings herein, SDM as described above may include any one of transmission technologies that transmit/receiver data onto multiple carriers, including multicarrier technologies such as Orthogonal Frequency Division Multiplexing (OFDM), wavelet OFDM, Discrete Wavelet Multitone (DWMT), for example, or single-carrier technologies with channel bonding, such as multiple bonded Quadrature Amplitude Modulation (QAM) channels.

Controller module 318 provides software configuration, management, and control of EPOC PHY 312, including CMC Interface FPGA 314 and SDM FPGA 316. In addition, controller module 318 registers CMC 112 with the OLT servicing CMC 112. In an embodiment, controller module 318 is an ONU chip, which includes an EPON MAC module.

DAC 320 and ADC 322 sit in the data path between EPOC PHY 312 and RF module 326, and provide digital-to-analog and analog-to-digital data conversion, respectively, between EPOC PHY 312 and RF module 326.

RF module 326 allows CMC 112 to transmit/receive RF signals over coaxial network 304. In other embodiments, RF module 326 may be external to CMC 112. RF TX circuitry 336 includes RF transmitter and associated circuitry (e.g., mixers, frequency synthesizer, voltage controlled oscillator (VCO), phase locked loop (PLL), power amplifier (PA), analog filters, matching networks, etc.). RF RX circuitry 338 includes RF receiver and associated circuitry (e.g., mixers, frequency synthesizer, VCO, PLL, low-noise amplifier (LNA), analog filters, etc.).

EPOC CNU 122 includes RF module 326, including RF TX circuitry 336 and RF RX circuitry 338, DAC 320, ADC 322, an EPOC PHY module 328, including SDM FPGA 316 and a CNU Interface FPGA 330, an EPOC MAC module 332, and a PHY module 334.

RF module 326, DAC 320, ADC 322, and SDM FPGA 316 may be as described above with respect to EPOC CMC 112. Accordingly, their operation in processing downstream traffic (i.e., traffic received from CMC 112) and upstream traffic (i.e., traffic to be transmitted to CMC 112), which should be apparent to a person of skill in the art based on the teachings herein, is omitted.

CNU Interface FPGA 330 provides an interface between SDM FPGA 316 and EPON MAC 332. As such, CNU Interface FPGA 330 may perform coaxial PHY level decoding functions, including line decoding and FEC decoding. EPON MAC module 332 implements an EPON MAC layer, including the ability to receive and process EPON Operation, Administration and Maintenance (OAM) messages, which may be sent by an OLT and forwarded by CMC 112 to CNU 122. In addition, EPON MAC 332 interfaces with a PHY module 334, which may implement an Ethernet PHY layer. PHY module 334 enables physical transmission over a user-network interface (UNI) 306 (e.g., Ethernet cable) to a connected user equipment.

### III Example Registration Procedures for EPOC

The EPON standard defines an ONU registration procedure for pure EPON networks. This procedure is a MAC-level only procedure and thus is not sufficient to enable proper operation of an EPOC network. Specifically, the coaxial portion of an EPOC network requires an auto-negotiation to determine the coaxial link spectrum, link bandwidth, and power level, and to establish precise timing between the CMC and the CNU. For example, in an EPON network, a link is designed to work at 1 Gbps or 10 Gbps. In an EPOC network, the coaxial link will likely be limited to a lower bandwidth, which needs to be discovered before the link can be used. Accordingly, this auto-negotiation must take place and the coaxial link must be ready for use before MAC layer discovery occurs. In addition, this auto-negotiation must not violate the EPON standard, which governs MAC-level interaction.

In the following, example registration procedures for EPOC are provided. These procedures are provided for the purpose of illustration only and are not limiting of embodiments of the present disclosure. As further illustrated below, the described procedures are compliant with the EPON standard. The procedures cover initial CMC registration, involving a CMC (e.g., CMC 112) and an OLT (e.g., OLT 102); PHY-level discovery and link up over a coaxial link of an EPOC network, involving a CMC (e.g., CMC 112) and a CNU (e.g., CNU 122); and MAC-level discovery and link up over an EPOC network, involving an OLT (e.g., OLT 102) and a CNU (e.g., CNU 122). As such, the procedures can be used to fully bring an EPOC network to user traffic readiness. In addition, the procedures, or a variation thereof, can be used to enable periodic maintenance of the coaxial link of the EPOC network, thereby maintaining adequate communication conditions over the coaxial link.

### A. Initial CMC Registration

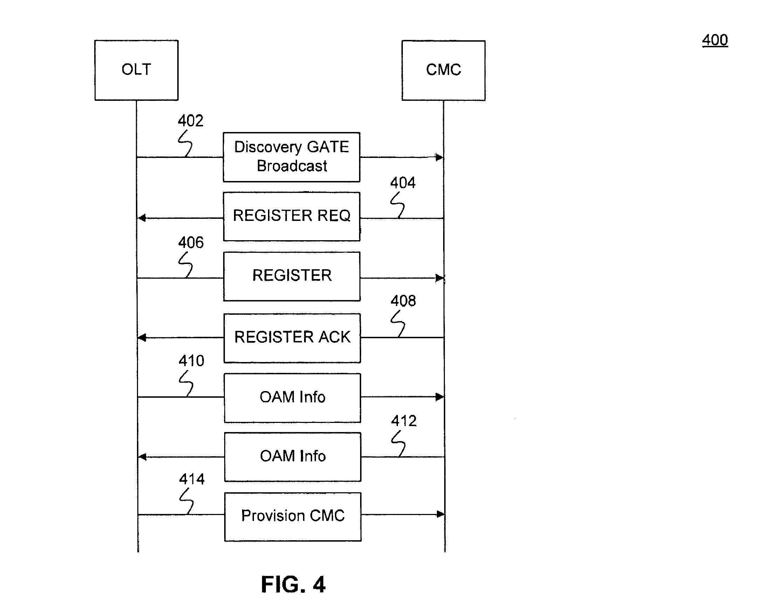

Before a CNU can be discovered (e.g., PHY-level discovery by CMC or MAC-level discovery by OLT), the OLT must discover the CMC that services the CNU. FIG. 4 illustrates an EPON ONU discovery process 400. EPON ONU discovery process 400 can be used by an OLT to discover any fiber-connected ONUs. As described above in FIG. 3, the CMC includes an ONU chip, and thus can be discovered using process 400 by the OLT. Process 400 may be performed by an OLT, such as OLT 102, and a CMC, such as CMC 112. Process 400 uses MPCP (Multi-Point Control Protocol) messages, which are EPON MAC-level messages.

As shown in FIG. 4, process 400 begins in step 402, which includes the OLT broadcasting a MPCP Discovery GATE message. The Discovery GATE message specifies a discovery time window. In step 404, after waiting a random amount of time (to avoid collision with other ONUs also trying to register), the CMC transmits a REGISTER REQ message to the OLT. The REGISTER REQ message contains the CMC's MAC address.

Upon receiving the REGISTER REQ message from the CMC, the OLT registers the CMC and assigns a Logical Link Identifier (LLID) to the CMC. Then, the OLT sends the assigned LLID to the CMC in a REGISTER message in step 406. Separately in a GATE message, or in the REGISTER message, the OLT then grants the CMC a transmission time slot. The CMC responds by sending a REGISTER ACK message, in step 408, in the assigned time slot. At this point, the CMC is registered and the logical link between the CMC and the OLT is established.

Subsequently, in steps 410 and 412, OAM messages are communicated between the OLT and CMC, at the end of which, in step 414, the OLT provisions the CMC for downstream operation over the coaxial portion of the EPOC network. For example, the OLT may provision the EPOC PHY module (e.g., EPOC PHY 312) of the CMC with the appropriate PHY-level communication parameters.

### B. Coaxial Discovery and Link Up

Once the CMC is provisioned for downstream operation over the coaxial portion of the EPOC network, the CMC may begin discovering any coaxial-connected CNUs and establishing the PHY links with any CNUs that wish to register. In embodiments, this phase may include a downstream discovery process, by which a CNU discovers the presence of the CMC, an upstream discovery process, by which the CMC discovers the presence of the CNU, and an upstream tuning process, by which upstream bursts from the CNU are tuned by the CMC.

### i) Downstream Discovery

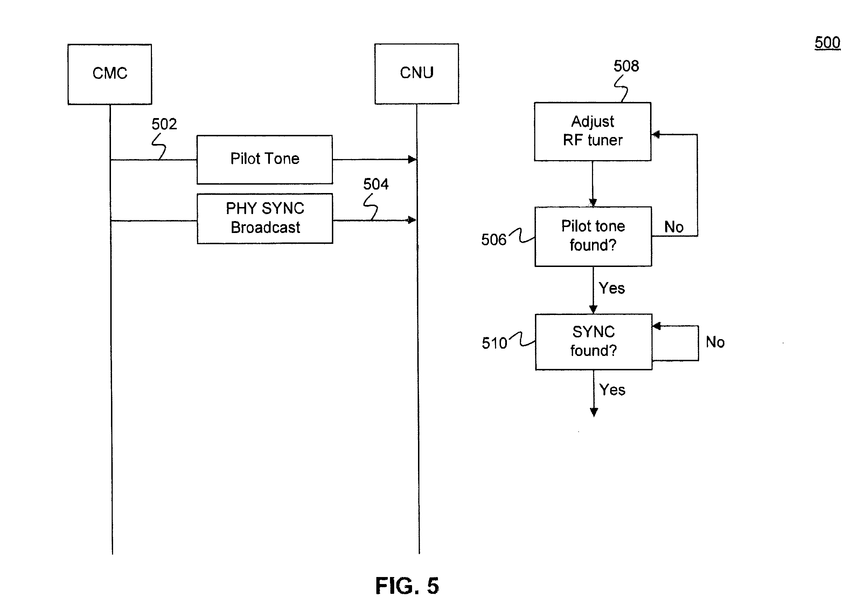

Downstream discovery is used by a CNU to discover the presence of a servicing CMC. FIG. 5 illustrates an example downstream discovery process 500 according to an embodiment of the present disclosure. Example process 500 is provided for the purpose of illustration only and is not limiting of embodiments of the present disclosure. Process 500 may be performed by a CMC, such as CMC 112, and a CNU, such as CNU 122.

As shown in FIG. 5, process 500 begins in step 502, which includes the CMC transmitting a pilot tone. The pilot tone is transmitted at a frequency known by the CNU (e.g., at a 2MHz offset from baseband frequency). At the same or at a different time, in step 504, the CMC broadcasts a PHY SYNC frame over the coaxial portion of the EPOC network. As further described below, the pilot tone allows the CNU to locate the SYNC frame, which provides the CNU with PHY characteristics of the downstream channel.

In an embodiment, the PHY SYNC frame is part of a downstream burst transmitted by the CMC over the coaxial portion of the EPOC network. The downstream burst may be periodic (e.g., repeats according to a 2 msec cycle) and may be fixed or variable in size. In another embodiment, the PHY SYNC frame is sent on a dedicated RF channel. For example, in a multi-channel system, the PHY SYNC may be sent on a single channel or multiple channels.

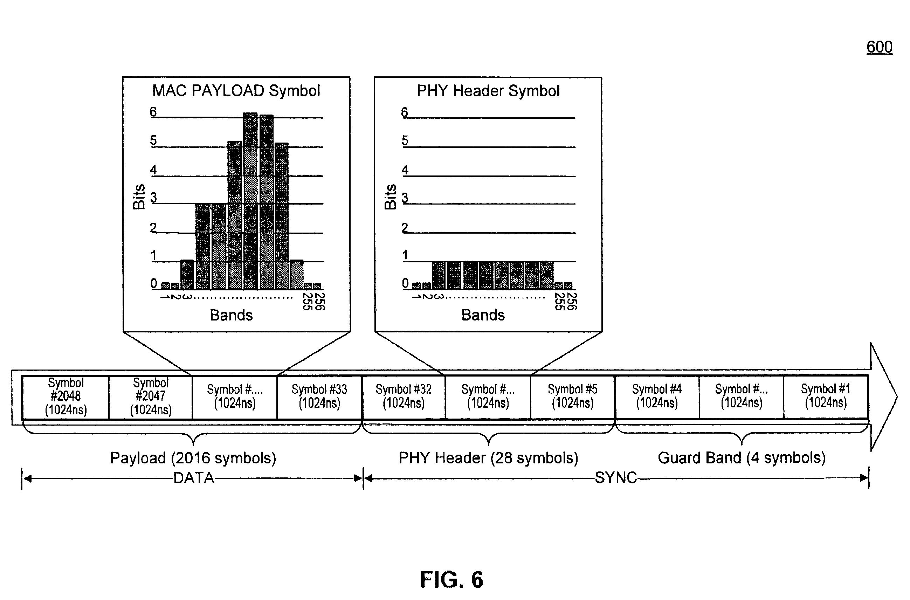

FIG. 6 illustrates an example downstream burst 600 according to an embodiment of the present disclosure. Example downstream burst 600 is provided for the purpose of illustration only and is not limiting.

As shown in FIG. 6, example downstream burst 600 includes a SYNC frame and a DATA frame. In an embodiment, the SYNC frame includes guard band symbols (which include no transmission) and PHY header symbols. In an embodiment, the PHY header symbols use a fixed low bit loading rate (e.g., 1 bit per sub-band). The DATA frame includes MAC payload symbols. In an embodiment, the MAC payload symbols use a variable, higher bit loading rate.

In an embodiment, as shown in FIG. 6, the SYNC frame includes 4 guard band symbols and 28 PHY header symbols. The DATA frame includes 2016 MAC payload symbols. The duration of each symbol is 1024 nsec. However, as would be understood by a person of skill in the art based on the teachings herein, the number of guard band symbols, PHY header symbols, and/or MAC payload symbols may be different in other embodiments and may also vary between downstream bursts. The duration of a symbol may also be different than 1024 nsec.

In an embodiment, the SYNC frame is used to provide information regarding the DATA frame to follow in the downstream burst. For example, the SYNC frame may include information regarding the active sub-bands in the DATA frame as well as the bit loading used for each of the active sub-bands. Because the SYNC frame is transmitted at a low bit loading rate, any CNU connected to the CMC can decode the SYNC frame and determine PHY characteristics of the downstream channel. The downstream PHY characteristics are used by the EPOC PHY (e.g., EPOC PHY 328) of the CNU to properly demodulate the downstream channel.

In addition, in another embodiment, the SYNC frame may be used to provide the CNU with an upstream channel description, defining the upstream channel spectrum, number of sub-bands, and bit loading rate per sub-band. The CNU EPOC PHY can use this information for subsequent upstream transmissions to the CMC EPOC PHY (e.g., EPOC PHY 312).

At the CNU, in an embodiment, the CNU performs a process that includes steps 506, 508, and 510, in order to discover the presence of the CMC. Specifically, after detecting the presence of RF power, in step 506, the CMC searches for the pilot tone transmitted by the CMC at a particular carrier frequency. If the pilot tone is not found, the CNU adjusts the RF tuner carrier frequency in step 508, and then attempts to locate the pilot tone once again for the new carrier frequency in step 506.

Once the pilot tone is found, the CNU proceeds to step 510, which includes detecting the SYNC frame of the downstream burst. In an embodiment, the CNU uses the pilot tone to determine the carrier frequency of the SYNC frame. The CNU periodically checks for the presence of the SYNC frame, until found.

### ii) Upstream Discovery

Upstream discovery allows a CMC to detect the presence of a coaxially-connected CNU. In embodiments, upstream discovery may occur at the EPON MAC level (e.g., using MPCP/OAM messages) or at the coaxial PHY level (e.g., using EPOC PHY messages).

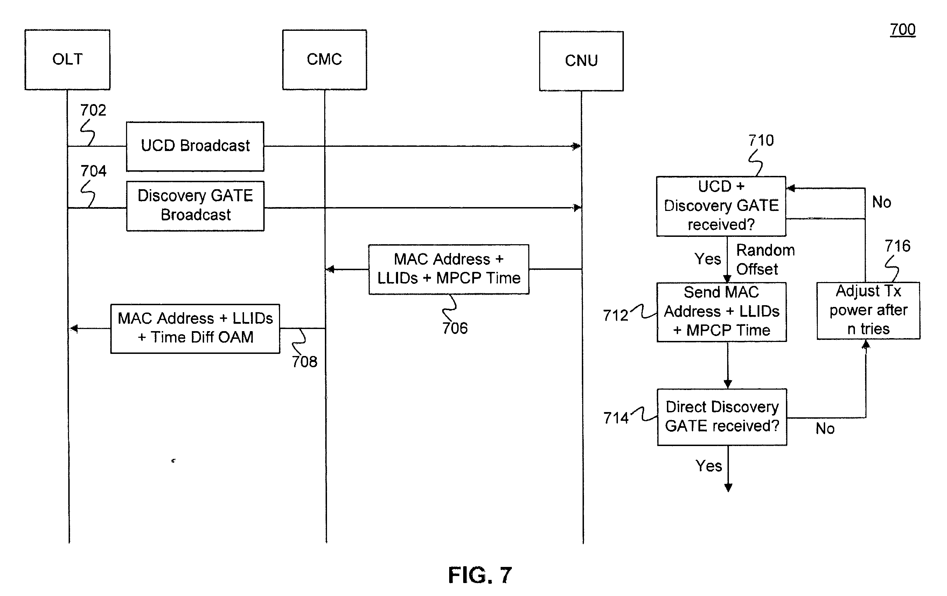

FIG. 7 illustrates an example upstream discovery process 700 according to an embodiment of the present disclosure. Example process 700 is provided for the purpose of illustration only and is not limiting of embodiments of the present disclosure. Process 700 may be performed by an OLT, such as OLT 102, a CMC, such as CMC 112, and a CNU, such as CNU 122.

Process 700 is an EPON MAC level discovery process. In an embodiment, process 700 follows downstream discovery process 500, described in FIG. 5 above. In particular, after the CNU detects the SYNC frame in step 510 of process 500, the CNU proceeds to step 710, which includes waiting to receive a UCD (Upstream Channel Descriptor) message and a MPCP Discovery GATE message.

At the same time or at a different time, the OLT broadcasts a UCD message in step 702. The UCD message is a MPCP level message, which defines the upstream sub-bands (e.g., frequencies, boundaries, etc.). Subsequently, in step 704, the OLT broadcasts a MPCP Discovery GATE message. The Discovery GATE message, as mentioned above, specifies a discovery time window. The CMC, as shown in FIG. 7, allows both the UCD frame and the Discovery GATE message to reach the CNU.

Once the CNU receives the UCD message and the MPCP Discovery GATE message, it proceeds to step 712. In step 712, the CNU waits a random offset before responding to the Discovery GATE message by sending a CNU MAC REGISTER REQUEST message 706 (MPCP level message) to the CMC. In an embodiment, the CNU MAC REGISTER REQUEST includes the MAC address of the CNU, the number of LLIDs that the CNU wishes to register, and a MPCP timestamp. In an embodiment, because the coaxial link between the CMC and the CNU has not yet been tuned, the CNU uses a low bit loading rate (e.g., 1 bit per sub-band) to send the CNU MAC REGISTER REQUEST message 706 to the CMC.

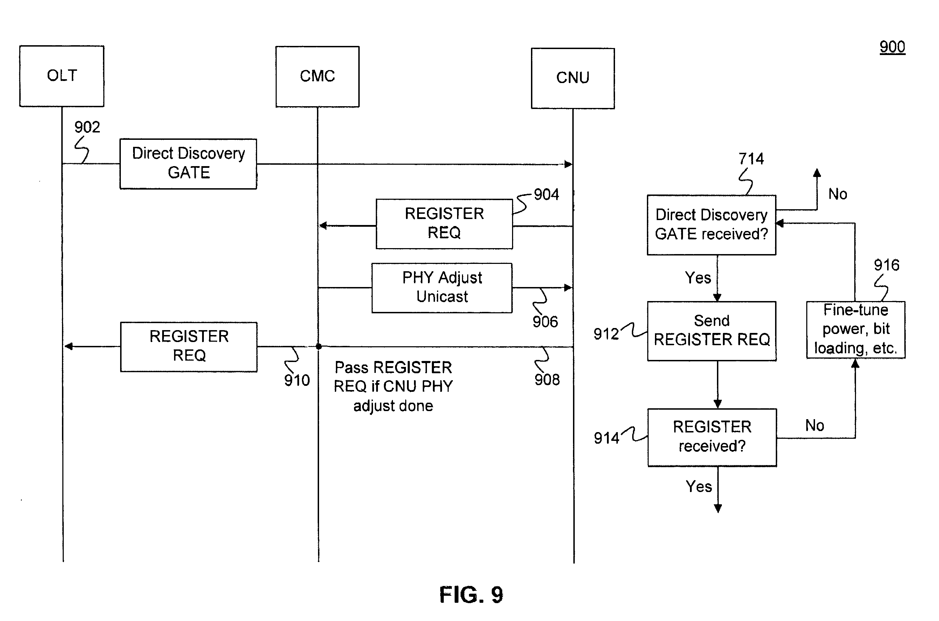

Subsequently, the CNU proceeds to step 714, in which the CNU waits for a pre-determined time period to receive a MPCP Direct Discovery GATE message. If a Direct Discovery GATE message is not received within the pre-determined time period, the CNU assumes that the CNU MAC REGISTER REQUEST message was not received by the CMC and returns to step 710, from which the above described process is repeated in the next discovery window. In an embodiment, after 'n' repetitions without success in receiving a Direct Discovery GATE message, the CNU adjusts its transmit (Tx) power in step 716 before returning to step 710. Once a Direct Discovery GATE message is received, the CNU proceeds to further processing as described below with reference to FIG. 9.

At the CMC, when the CMC successfully receives the CNU MAC REGISTER REQUEST message from the CNU, the CMC has discovered the CNU. The CMC uses the MPCP timestamp from the CNU message and the reception time of the message to determine a time difference, representative of the propagation time between the CMC and the CNU. The CMC then includes this time difference, the MAC address, and the LLID information from the CNU message in an OAM message, which it sends to the OLT in step 708. In an embodiment, the CMC releases the OAM message onto the fiber to the OLT at a fixed delay from the reception time of the CNU MAC REGISTER REQUEST message from the CNU. The fixed delay allows the OLT to properly measure the round-trip time (RTT) to the CNU and to direct discovery to the CNU, as further described below with reference to FIG. 9.

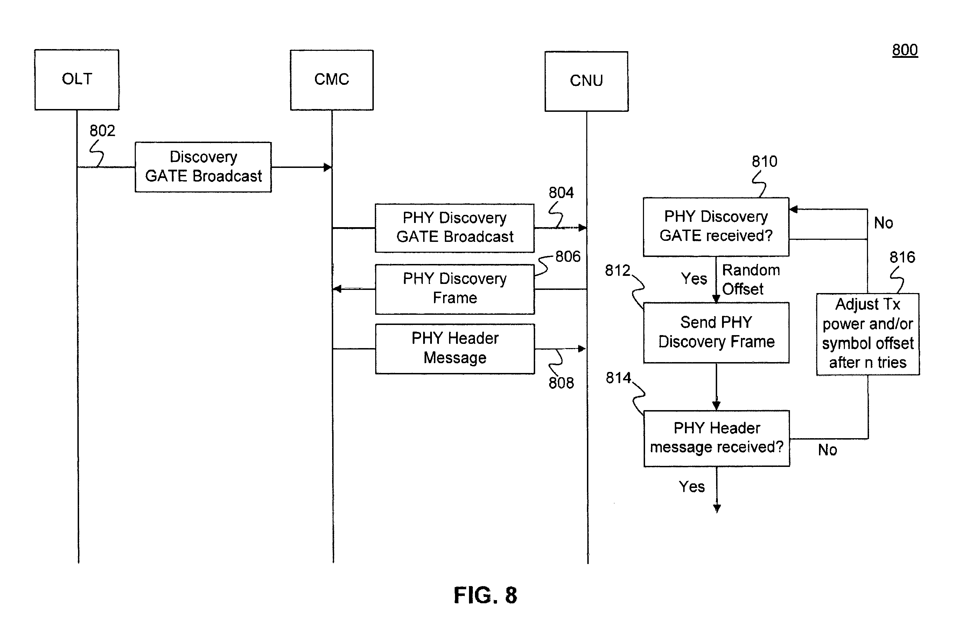

FIG. 8 illustrates another example upstream discovery process 800 according to an embodiment of the present disclosure. Example process 800 is provided for the purpose of illustration only and is not limiting of embodiments of the present disclosure. Process 800 may be performed by an OLT, such as OLT 102, a CMC, such as CMC 112, and a CNU, such as CNU 122.

Process 800 is an EPOC PHY level discovery process. In an embodiment, process 800 follows downstream discovery process 500, described in FIG. 5 above. In particular, after the CNU detects the SYNC frame in step 510 of process 500, the CNU proceeds to step 810, which includes waiting to receive a PHY Discovery GATE message.

At the same time or at a different time, the OLT broadcasts, in step 802, a MPCP Discovery GATE message, intended for MAC discovery. The Discovery GATE message, as mentioned above, specifies a discovery time window. The CMC intercepts the MPCP Discovery GATE message from the OLT and generates a PHY Discovery GATE message, with it broadcasts to coaxially-connected CNUs in step 804. The PHY Discovery GATE specifies a discovery time window which corresponds to the discovery time window specified by the MPCP Discovery GATE message. As such, EPON MAC operation is not affected by the PHY level process performed between the CMC and the CNU.

A CNU that had been PHY discovered previously ignores the PHY Discovery GATE. Otherwise, once the CNU receives the PHY Discovery GATE message, it proceeds to step 812. In step 812, the CNU waits a random offset before responding to the PHY Discovery GATE message by sending, in a PHY Discovery frame 806 to the CMC. In an embodiment, PHY Discovery frame 806 is a fixed size frame and includes the MAC address of the CNU. In another embodiment, PHY Discovery frame 806 is transmitted at a low bit loading rate (e.g., 1 bit per sub-band) to enhance the CMC's chances of properly receiving it.

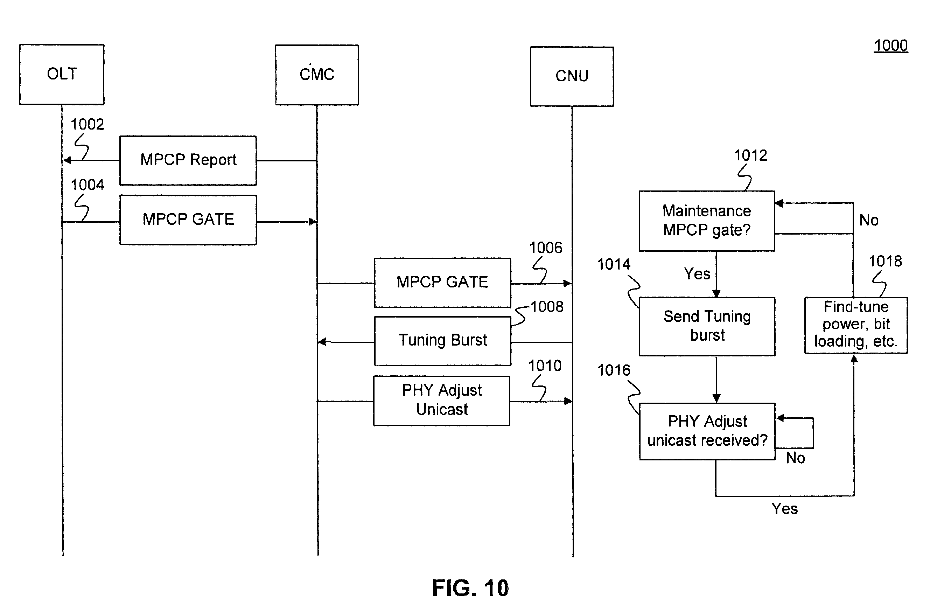

Subsequently, the CNU proceeds to step 814, in which the CNU waits for a pre-determined time period to receive a PHY Header message. If a PHY Header message is not received within the pre-determined time period, the CNU assumes that the PHY Discovery frame was not received by the CMC and returns to step 810, from which the above described process is repeated in the next PHY discovery window. In an embodiment, after 'n' repetitions without success in receiving a PHY Header message, the CNU adjusts its transmit (Tx) power and/or symbol offset in step 816 before returning to step 810. Once a PHY Header message is received, the CNU proceeds to further processing as described below with reference to FIG. 10.

At the CMC, when the CMC successfully receives the PHY Discovery frame from the CNU, the CMC has discovered the CNU PHY. The CMC addresses, in step 808, a PHY Header message to the CNU. The PHY Header message informs the CNU that it has been discovered by assigning a PHY link ID to the CNU.

### iii) Upstream Tuning

Upstream tuning allows the CMC to tune the upstream transmit time, transmit power, and/or sub-band configuration of a coaxially-connected CNU for enhanced performance. In an embodiment, upstream tuning includes the CMC measuring one or more parameters (e.g., phase, amplitude, error rate, etc.) from upstream bursts from the CNU and sending PHY commands to the CNU to adjust one or more transmission parameters (e.g., transmit time, transmit power, sub-band configuration, etc.), as appropriate, based on the measurements. Since the upstream channel is typically used by other in service CNUs, upstream tuning must be performed in reserved upstream time slots, as further described below.

FIG. 9 illustrates an example upstream tuning process 900 according to an embodiment of the present disclosure. Example process 900 is provided for the purpose of illustration only and is not limiting of embodiments of the present disclosure. Process 900 may be performed by an OLT, such as OLT 102, a CMC, such as CMC 112, and a CNU, such as CNU 122.

In an embodiment, process 900 follows upstream discovery process 700, described above in FIG. 7. In particular, in step 714 of process 700, the CNU enters a waiting period, in which the CNU waits to receive a MPCP Direct Discovery GATE message. While the CNU is in this state, the OLT, in step 902, sends a Direct Discovery GATE message to the CNU. The Direct Discovery GATE message is a unicast message destined to the CNU, requesting that the CNU register with the OLT in a specified registration slot.

If the Direct Discovery GATE message is received by the CNU, the CNU proceeds to step 912, in which the CNU sends a MPCP REGISTER REQ message 904 on the coaxial cable destined to the OLT. The CNU then proceeds to step 914 to await the receipt of a MPCP REGISTER message from the OLT.

Meanwhile, the CMC receives the MPCP REGISTER REQ message from the CNU, and instead of forwarding the MPCP REGISTER REQ message on to the OLT, the CMC traps the MPCP REGISTER REQ message and uses the registration slot (or what remains of it) to upstream tune the CNU. Specifically, in step 906, the CMC sends a unicast PHY adjust message to the CNU. The PHY adjust message may include fine-tune adjustments to the upstream transmit power, transmit time, sub-band configuration, and/or bit loading at the CNU. The fine-tune adjustments may be based on previous measurements made by the CMC of upstream transmissions by the CNU. In an embodiment, the PHY adjust message is sent in the SYNC frame of the downstream burst from the CMC.

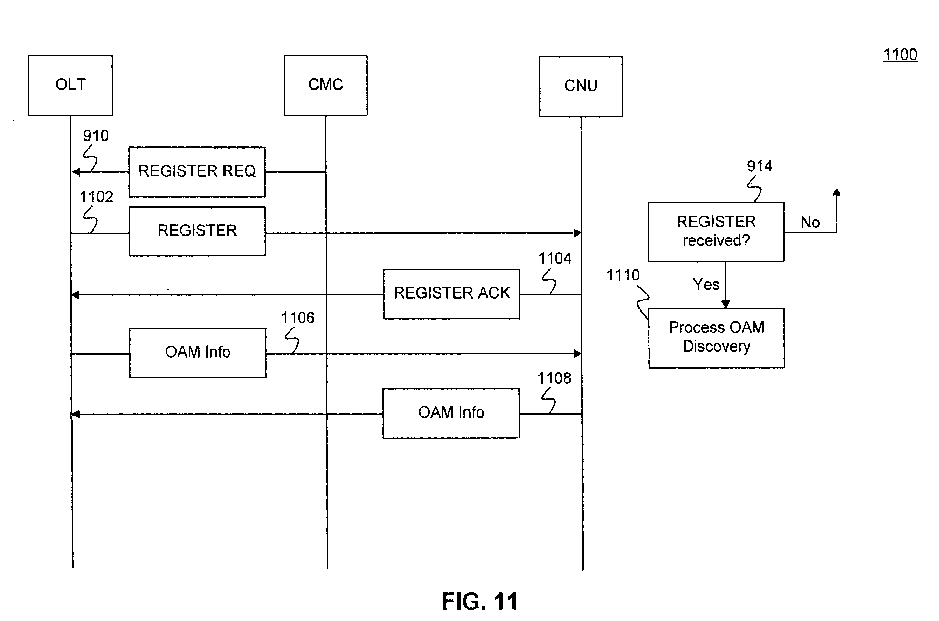

The CNU, awaiting a MPCP REGISTER message in step 914, receives the PHY adjust message and proceeds to step 916, in which the CNU adjusts its transmission parameters according to the fine-tune adjustments contained in the PHY adjust message. The CNU then returns to step 714, from which the above process may repeat as described above, until the CMC determines that upstream tuning is done. Specifically, when the CMC determines that the CNU upstream tuning is done, the CMC will allow a REGISTER REQ message sent by the CNU in step 908 (in response to a subsequent Direct Discovery GATE message from the OLT, which is not shown in FIG. 9) to proceed to the OLT in step 910. Upon receiving the REGISTER REQ message, the OLT sends a REGISTER message to the CNU, which allows the CNU to exit step 914 and proceed to further processing as described below with reference to FIG. 11.

FIG. 10 illustrates another example upstream tuning process 1000 according to an embodiment of the present disclosure. Example process 1000 is provided for the purpose of illustration only and is not limiting of embodiments of the present disclosure. Process 1000 may be performed by an OLT, such as OLT 102, a CMC, such as CMC 112, and a CNU, such as CNU 122.

In an embodiment, process 1000 follows upstream discovery process 800, described above in FIG. 8. In particular, in step 814 of process 800, the CNU enters a waiting period, in which the CNU waits to receive a PHY header message. Once a PHY Header message is received, the CNU proceeds to step 1012 of process 1000, in which the CNU awaits the reception of a MPCP maintenance-tagged GATE message.

As mentioned above, upstream tuning must be performed in reserved upstream time slots in order to not interfere with upstream transmissions by other in service CNUs. To reserve upstream time slots, in example process 1000, the CMC sends a MPCP Report message to the OLT in step 1002. The MPCP Report message requests an upstream time slot of a predetermined length for use by the CMC.

In response to the MPCP Report message, the OLT sends a MPCP GATE message to the CMC in step 1004. The MPCP GATE message grants an upstream time window reserved for the CMC. The CMC modifies the MPCP GATE message by changing the destination address and/or LLID to the CNU MAC address and/or LLID and adjusting the granted upstream time window to accommodate the RTT between the CMC and the CNU. In addition, the CMC tags the MPCP GATE message as a maintenance message, and adds a PHY index in the message that identifies the CNU PHY being tuned. The CMC (using its EPOC PHY module) then sends the modified MPCP GATE message to the CNU in step 1006. In an embodiment, the CMC may then send idle bits or packets generated by the CMC upstream to the OLT during the reserved upstream time window.

In another embodiment, a pre-determined LLID is assigned for PHY tuning. The OLT polls this LLID as though it is expecting a response from the LLID. The CMC will intercept this polling to perform PHY tuning for any CNU connected to it. One advantage of this embodiment is that when multiple CMCs are present on the same OLT port, the same slot can be used by each CMC to fine tune its CNUs, thereby drastically decreasing the maintenance overhead.

At the CNU, the modified MPCP GATE message is intercepted by the EPOC PHY module of the CNU (and is not forwarded to the EPON MAC module of the CNU) based on its maintenance tag. The CNU then proceeds to step 1014, in which the CNU transmits a PHY tuning burst 1008 to the CMC, in the upstream time window specified in the modified MPCP GATE message. The CNU then proceeds to step 1016 to wait for the reception of a unicast PHY adjust message from the CMC.

The CMC (using its EPOC PHY module) measures one or more parameters (e.g., phase, amplitude, error rate, etc.) based on the PHY tuning burst from the CNU, and then, in step 1010, sends a unicast PHY adjust message to the CNU to adjust one or more transmission parameters (e.g., transmit time, transmit power, sub-band configuration, etc.), as appropriate, based on the measurements. In an embodiment, this processing by the CMC is done exclusively at the PHY level (e.g., by the EPOC PHY module of the CMC). In embodiments, process 1000 may be repeated more than one time, until the CNU is tuned to go in service.

### C. MAC Discovery and Link Up

Once the PHY link between the CMC and the CNU has been established and tuned, as described above, the CMC allows the CNU to register and/or to be discovered by the OLT. In one embodiment, as further described below, the OLT already knows the MAC address of the CNU, and this process completes the MPCP discovery and allows the EPON MAC of the CNU to register with the OLT. In another embodiment, no MAC-level communication has occurred yet between the OLT and the CNU, and this process allows the EPON MAC of the CNU to be discovered by and to register with the OLT.

FIG. 11 illustrates an example discovery process 1100 according to an embodiment of the present disclosure. Example process 1100 is provided for the purpose of illustration only and is not limiting of embodiments of the present disclosure. Process 1100 may be performed by an OLT, such as OLT 102, a CMC, such as CMC 112, and a CNU, such as CNU 122.

In an embodiment, process 1100 follows upstream tuning process 900, described above in FIG. 9. In particular, in step 910 of process 900, the CMC allows the REGISTER REQ message from the CNU to pass through to the OLT, at the end of the PHY tuning. The REGISTER REQ message contains the CNU's MAC address.

Upon receiving the REGISTER REQ message, the OLT registers the CNU and assigns it a LLID. Then, the OLT sends the assigned LLID to the CNU in a REGISTER message in step 1102. Separately in a GATE message, or in the REGISTER message, the OLT then grants the CNU a transmission time slot. The CNU responds by sending a REGISTER ACK message, in step 1104, in the assigned time slot. At this point, the CNU is registered and the logical link between the CNU and the OLT is established. The CNU proceeds to step 1110 to process any incoming OAM Discovery message.

Subsequently, in steps 1106 and 1108, OAM messages are communicated between the OLT and CNU to perform OAM discovery, at the end of which, the EPON MAC link between the OLT and the CNU is ready for user traffic communication.

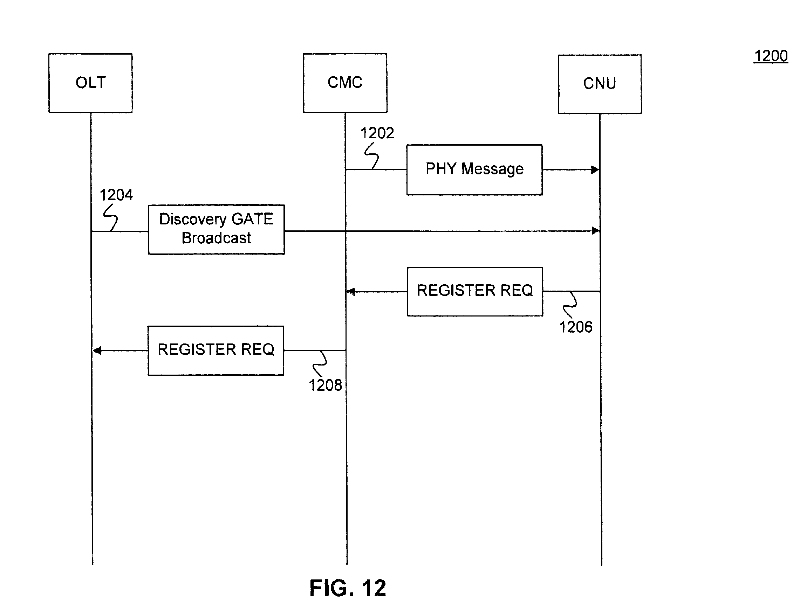

FIG. 12 illustrates another example discovery process 1200 according to an embodiment of the present disclosure. Example process 1200 is provided for the purpose of illustration only and is not limiting of embodiments of the present disclosure. Process 1200 may be performed by an OLT, such as OLT 102, a CMC, such as CMC 112, and a CNU, such as CNU 122.

In an embodiment, process 1200 follows upstream tuning process 1000, described above in FIG. 10. In particular, in step 1010 of process 1000, the CMC sends a unicast PHY adjust message to the CNU to adjust one or more upstream transmission parameters at the CNU. Once CNU upstream transmissions show acceptable performance at the CMC, the CMC sends in step 1202 a PHY message to the CNU, instructing the CNU to attempt to link up with the OLT. The PHY message is received by the CNU PHY module (e.g., EPOC PHY 328), which now begins to allow EPON MAC messages to pass on to the EPON MAC module (e.g., EPON MAC 332) of the CNU.

Subsequently, in step 1204 (in the next EPON discovery window, for example), the OLT broadcasts a Discovery GATE message. The Discovery GATE message is allowed to reach the EPON MAC of the CNU by the EPOC PHY of the CNU. The EPON MAC of the CNU responds, in step 1206, by sending a time-stamped REGISTER REQ message at a random offset within the slot specified in the Discovery GATE message. In an embodiment, the REGISTER REQ message is transmitted by the CNU with a full header burst (with SYNC pulses) to allow the CMC PHY to determine the start of the burst, since the message is transmitted at a random offset.

The CMC receives the REGISTER REQ message and sends, in step 1208, the REGISTER REQ message to the OLT at a fixed delay from when it was received. The fixed delay allows the OLT to properly measure the round-trip time (RTT) to the CNU. Subsequently, OAM discovery may take place as described above with respect to steps 1106 and 1108 of process 1000, and then user traffic can begin to flow between the CNU and the OLT.

### D. Coaxial PHY Periodic Maintenance

As conditions change on the coaxial segment due to temperature and interference, for example, periodic tuning of the upstream is required. In an embodiment, the periodic maintenance may only require a re-measurement of the phase and amplitude of upstream transmissions. In another embodiment, the periodic tuning may, alternatively or additionally, require adjusting bit loading, transmit power, transmit time, and/or disabling/enabling upstream sub-bands. According to embodiments, periodic maintenance is performed without dropping any user data, in between user traffic. In an embodiment, periodic maintenance is triggered by the CMC periodically or based on measurements made by the CMC, including, for example and without limitation, bit error rate, phase error, amplitude error, etc.

In an embodiment, periodic tuning is performed using the same PHY tuning process used at link up, such as process 1000, for example. In particular, periodic tuning begins with the CMC controller (e.g., controller 318) sending a MPCP Report message to the OLT, in order to reserve upstream time slots. The MPCP Report message requests an upstream time slot of a predetermined length for use by the CMC. The length of the upstream time slot is selected to be large enough for the expected PHY tuning burst from the CNU being tuned. In embodiments, the PHY tuning burst size depends on the tuning to be performed and the type of measurements to be made on the burst by the CMC. For example, larger bursts are needed for more accurate bit error rate measurements.

In response to the MPCP Report message, the OLT sends a MPCP GATE message to the CMC. The MPCP GATE message grants an upstream time window reserved for the CMC. The CMC modifies the MPCP GATE message by changing the destination address to the MAC address of the CNU under maintenance, and adjusting the granted upstream time window to accommodate the RTT between the CMC and the CNU. In addition, the CMC tags the MPCP GATE message as a maintenance message and adds a new PHY index in the message, different than the currently active PHY index assigned to the CNU. The CMC then sends the modified MPCP GATE message to the CNU. In an embodiment, the CMC may then send idle bits upstream to the OLT during the reserved upstream time window.

At the CNU, the modified MPCP GATE message is intercepted by the EPOC PHY module of the CNU (and is not forwarded to the EPON MAC module of the CNU) based on its maintenance tag. The CNU then proceeds to send a PHY tuning burst to the CMC as instructed by the modified MPCP GATE message.

The CMC receives the PHY tuning burst from the CNU and makes measurements as needed based on the PHY tuning burst. The CMC then associates the measurements with the new PHY index, instead of the currently active PHY index of the CNU. By doing so, the CMC may send PHY adjust messages to the CMC, instructing it to adjust upstream transmission parameters for the new PHY index, without running the risk of losing user data while testing transmission parameters on the active PHY index. The CMC may make measurements, as needed, on one or more upstream tuning bursts from the CNU on the new PHY index, while user traffic continues to flow, unaffected by the ongoing maintenance, on the active index. Once acceptable upstream performance on the new PHY index is achieved (with a new upstream transmission configuration), the CMC instructs the CNU to switch the user traffic to the new PHY index, which becomes the active PHY index for the CNU.

### IV. Example Computer System Environment

It will be apparent to persons skilled in the relevant art(s) that various elements and features of the present disclosure, as described herein, can be implemented in hardware using analog and/or digital circuits, in software, through the execution of instructions by one or more general purpose or special-purpose processors, or as a combination of hardware and software.

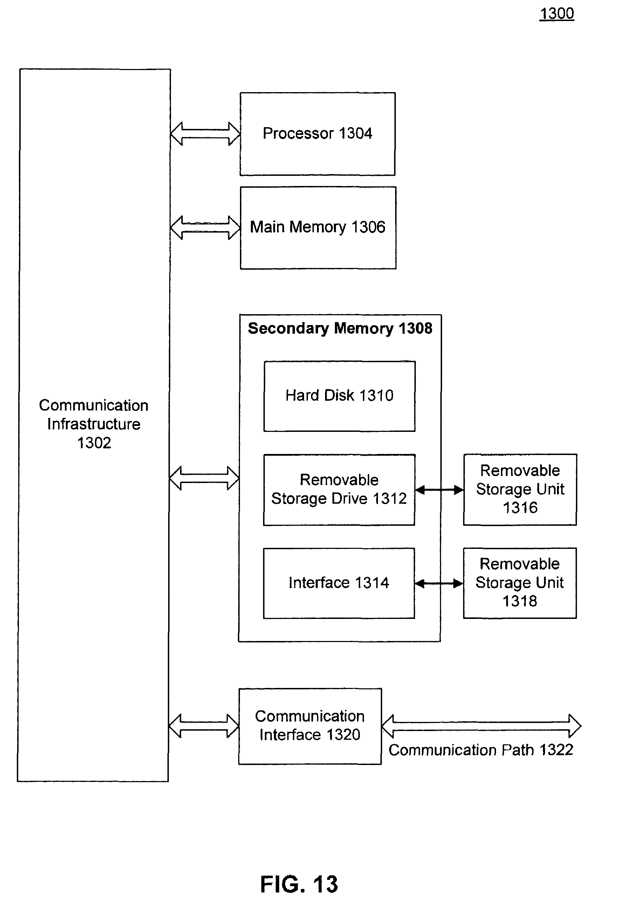

The following description of a general purpose computer system is provided for the sake of completeness. Embodiments of the present disclosure can be implemented in hardware, or as a combination of software and hardware. Consequently, embodiments of the disclosure may be implemented in the environment of a computer system or other processing system. An example of such a computer system 1300 is shown in FIG. 13. Modules depicted in FIGs. 1-3 may execute on one or more computer systems 1300. Furthermore, each of the steps of the processes depicted in FIGs. 4, 5, and 7-12 can be implemented on one or more computer systems 1300.

Computer system 1300 includes one or more processors, such as processor 1304. Processor 1304 can be a special purpose or a general purpose digital signal processor. Processor 1304 is connected to a communication infrastructure 1302 (for example, a bus or network). Various software implementations are described in terms of this exemplary computer system. After reading this description, it will become apparent to a person skilled in the relevant art(s) how to implement the disclosure using other computer systems and/or computer architectures.

Computer system 1300 also includes a main memory 1306, preferably random access memory (RAM), and may also include a secondary memory 1308. Secondary memory 1308 may include, for example, a hard disk drive 1310 and/or a removable storage drive 1312, representing a floppy disk drive, a magnetic tape drive, an optical disk drive, or the like. Removable storage drive 1312 reads from and/or writes to a removable storage unit 1316 in a well-known manner. Removable storage unit 1316 represents a floppy disk, magnetic tape, optical disk, or the like, which is read by and written to by removable storage drive 1312. As will be appreciated by persons skilled in the relevant art(s), removable storage unit 1316 includes a computer usable storage medium having stored therein computer software and/or data.

In alternative implementations, secondary memory 1308 may include other similar means for allowing computer programs or other instructions to be loaded into computer system 1300. Such means may include, for example, a removable storage unit 1318 and an interface 1314. Examples of such means may include a program cartridge and cartridge interface (such as that found in video game devices), a removable memory chip (such as an EPROM, or PROM) and associated socket, a thumb drive and USB port, and other removable storage units 1318 and interfaces 1314 which allow software and data to be transferred from removable storage unit 1318 to computer system 1300.

Computer system 1300 may also include a communications interface 1320. Communications interface 1320 allows software and data to be transferred between computer system 1300 and external devices. Examples of communications interface 1320 may include a modem, a network interface (such as an Ethernet card), a communications port, a PCMCIA slot and card, etc. Software and data transferred via communications interface 1320 are in the form of signals which may be electronic, electromagnetic, optical, or other signals capable of being received by communications interface 1320. These signals are provided to communications interface 1320 via a communications path 1322. Communications path 1322 carries signals and may be implemented using wire or cable, fiber optics, a phone line, a cellular phone link, an RF link and other communications channels.

As used herein, the terms "computer program medium" and "computer readable medium" are used to generally refer to tangible storage media such as removable storage units 1316 and 1318 or a hard disk installed in hard disk drive 1310. These computer program products are means for providing software to computer system 1300.

Computer programs (also called computer control logic) are stored in main memory 1306 and/or secondary memory 1308. Computer programs may also be received via communications interface 1320. Such computer programs, when executed, enable the computer system 1300 to implement the present disclosure as discussed herein. In particular, the computer programs, when executed, enable processor 1304 to implement the processes of the present disclosure, such as any of the methods described herein. Accordingly, such computer programs represent controllers of the computer system 1300. Where the disclosure is implemented using software, the software may be stored in a computer program product and loaded into computer system 1300 using removable storage drive 1312, interface 1314, or communications interface 1320.

In another embodiment, features of the disclosure are implemented primarily in hardware using, for example, hardware components such as application-specific integrated circuits (ASICs) and gate arrays. Implementation of a hardware state machine so as to perform the functions described herein will also be apparent to persons skilled in the relevant art(s).

### V. Conclusion

Embodiments have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the disclosure that others can, by applying knowledge within the skill of the art, readily modify and/or adapt for various applications such specific embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of embodiments of the present disclosure should not be limited by any of the above-described exemplary embodiments, but should be defined only in accordance with the following claims and their equivalents.

## Claims

1. A method for tuning a coaxial link in an Ethernet Passive Optical Network over Coaxial (EPOC) network, comprising:
sending a first Ethernet Passive Optical Network (EPON) Medium Access Control (MAC) message to an Optical Line Terminal (OLT);
receiving a second EPON MAC message from the OLT, the second EPON MAC message specifying a first reserved upstream time slot;
generating a modified EPON MAC message from the second EPON MAC message, the second EPON MAC message specifying a second reserved upstream time slot based on the first reserved upstream time slot;
sending the modified EPON MAC message to a Coaxial Network Unit (CNU);
receiving a tuning burst from the CNU within the second reserved upstream time slot; and
sending a tuning message to the CNU based on the received tuning burst.

2. The method of claim 1, wherein the first EPON MAC message is a Multi-Point Control Protocol (MPCP) Report message.

3. The method of claim 1 or 2, wherein the first EPON MAC message includes a desired length of the first reserved upstream time slot.

4. The method of claim 3, wherein the desired length of the first reserved upstream time slot is determined based on an anticipated length of the tuning burst from the CNU.

5. The method of any preceding claim, wherein the second EPON MAC message is a Multi-Point Control Protocol (MPCP) GATE message.

6. The method of any preceding claim, wherein generating the modified EPON MAC message from the second EPON MAC message comprises:
replacing a MAC destination address of the second EPON MAC message with a MAC destination address of the CNU; and
tagging the second EPON MAC message as a maintenance message.

7. The method of any preceding claim, wherein generating the modified EPON MAC message further comprises:
adding a physical layer (PHY) index into the modified EPON MAC message.

8. The method of claim 7, wherein the PHY index identifies an active PHY link assigned to the CNU.

9. The method of claim 7 or 8, wherein the PHY index identifies a test PHY link.

10. The method of any preceding claim, further comprising:
measuring at least one of amplitude, phase, and bit error rate based on the received tuning burst.

11. The method of any preceding claim, wherein the tuning message includes adjustments to one or more of upstream transmit time, upstream transmit power, upstream sub-band configuration, and upstream bit loading rate at the CNU.

12. A Coaxial Media Converter (CMC), comprising:
an Ethernet Passive Optical Network (EPON) Medium Access Control (MAC) module configured to send a first EPON MAC message to an Optical Line Terminal (OLT), receive a second EPON MAC message from the OLT, the second EPON MAC message specifying a first reserved upstream time slot, and generate a modified EPON MAC message from the second EPON MAC message, the second EPON MAC message specifying a second reserved upstream time slot based on the first reserved upstream time slot; and
an Ethernet Passive Optical Network over Coaxial (EPOC) physical layer (PHY) module configured to send the modified EPON MAC message to a Coaxial Network Unit (CNU).

13. The CMC of claim 12, wherein the EPOC PHY module is further configured to receive a tuning burst from the CNU within the second reserved upstream time slot, and to send a tuning message to the CNU based on the received tuning burst.

14. The CMC of claim 13, wherein the EPOC PHY is further configured to measure at least one of amplitude, phase, and bit error rate based on the received tuning burst.

15. A method for tuning a coaxial link in an Ethernet Passive Optical Network over Coaxial (EPOC) network, comprising:
intercepting a first Ethernet Passive Optical Network (EPON) Medium Access Control (MAC) message destined to an Optical Line Terminal (OLT) from a Coaxial Network Unit (CNU), the first EPON MAC message being sent within a reserved upstream time slot assigned by the OLT; and
sending a tuning message to the CNU in a remaining time period of the reserved upstream time slot.
